# EUROPÄISCHE PATENTSCHRIFT

(11) **EP 2 791 533 B1**
(45) Veröffentlichungstag und Bekanntmachung des Hinweises auf die Patenterteilung: **23.03.2016**
(21) Anmeldenummer: 12799208.9
(22) Anmeldetag: 13.12.2012
(51) Int. Cl.: F16D 51/20

(54) **BREMSTRÄGER**
BRAKE CARRIER
SUPPORT DE FREIN

(30) Priorität: 16.12.2011 DE 102011088851
(43) Veröffentlichungstag der Anmeldung: 22.10.2014
(73) Patentinhaber: SAF-HOLLAND GmbH, 63856 Bessenbach (DE)
(72) Erfinder: DREWES, Olaf, 63743 Aschaffenburg (DE); CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2012/075311
(87) Internationale Veröffentlichungsnummer: WO 2013/087737

(56) Entgegenhaltungen:
- WO-A1-01/46600
- DE-A1- 3 909 067
- US-A- 5 301 774
- US-A- 6 148 968

## Beschreibung

Die vorliegende Erfindung betrifft einen Bremsträger einer Trommelbremse, insbesondere für den Einsatz in Nutzfahrzeugen.

Bremsträger sind aus dem Stand der Technik bekannt. Sie dienen insbesondere der Festlegung von Komponenten eines Bremssystems an der Achse, bzw. dem Fahrwerk eines Nutzfahrzeuges. Dabei sind die aus dem Stand der Technik bekannten Bremsträger meist scheibenförmig ausgelegt und weisen eine Vielzahl von Aussparungen bzw. Bohrungen auf, in welchen Befestigungselemente eingreifen, um Komponenten am Bremsträger festzulegen. Die aus dem Stand der Technik bekannten Bremsträger sind oftmals dafür ausgelegt verschiedenenartige Bremssysteme an der Achse des Nutzfahrzeuges festzulegen, wobei insbesondere bevorzugt eine kreisförmige Geometrie gewählt wird, welche es erlaubt verschieden große Bremskomponenten an dem Bremsträger festzulegen. Hieraus resultiert eine Überdimensionierung und zusätzliches Gewicht des Bremsträgers. Weiterhin ist auch die Montage des Bremsträgers nicht automatisierbar durchführbar ist, sondern muss von Hand unter großem Aufwand durchgeführt werden. Es besteht daher ein erheblicher Verbesserungsbedarf bezüglich der Gewichtsoptimierung und der Reduzierung des Montageaufwandes des Bremsträgers.

Die DE 39 09 067 A1 offenbart einen Bremsträger einer Trommelbremse, umfassend eine Trägereinheit, wobei die Trägereinheit einen ersten Anschlussabschnitt aufweist, an welchem ein Bremszylinder festlegbar ist, wobei die Trägereinheit einen zweiten Anschlussabschnitt aufweist, an welchem eine Wandlereinheit festlegbar ist, wobei zwischen dem ersten Anschlussabschnitt und dem zweiten Anschlussabschnitt ein Gehäusebereich zur Aufnahme eines Übertragungselements vorgesehen ist, wobei der Bremszylinder, das Übertragungselement und die Wandlereinheit über die Trägereinheit an einem Achselement des Nutzfahrzeuges festlegbar sind, wobei das Übertragungselement zur Kraftübertragung im Wesentlichen längs einer Übertragungsachse verlagerbar ist, und wobei die Übertragungsachse derart um einen Winkel zur Radachse geneigt ist, dass die Wandlereinheit näher an der Radachse angeordnet ist als der Bremszylinder.

Aufgabe der vorliegenden Erfindung ist es also, einen Bremsträger, insbesondere bevorzugt für eine Spreizkeiltrommelbremse, bereitzustellen der durch eine optimierte Auslegung Gewichtseinsparungen und eine vereinfachte Montage ermöglicht.

Diese Aufgabe wird gelöst mit einem Bremsträger gemäß dem unabhängigen Anspruch 1. Weitere Vorteile und Merkmale der Erfindung ergeben sich aus den abhängigen Ansprüchen.
Erfindungsgemäß umfasst der Bremsträger einer Trommelbremse, welche insbesondere als Spreizkeiltrommelbremse bzw. als Spreizkeiltrommelbremssystem ausgebildet ist, eine Trägereinheit, wobei die Trägereinheit einen ersten Anschlussabschnitt aufweist an welchem ein Bremszylinder festlegbar ist, wobei die Trägereinheit einen zweiten Anschlussabschnitt aufweist an welchem eine Wandlereinheit festlegbar ist, wobei zwischen dem ersten und dem zweiten Anschlussabschnitt ein Gehäusebereich zur Aufnahme eines Übertragungselements vorgesehen ist und wobei der Bremszylinder das Übertragungselement und die Wandlereinheit über die Trägereinheit an einem Achselement des Nutzfahrzeuges festlegbar sind. Die Trägereinheit ist insbesondere bevorzugt ein Bauteil welches die Funktion eines herkömmlichen Bremsträgers übernimmt. Zu diesem Zweck weist die Trägereinheit einen ersten Anschlussabschnitt auf, an welchem ein Bremszylinder festlegbar ist. Der Bremszylinder ist insbesondere bevorzugt ein pneumatisch betriebener Membranbremszylinder und ist vorzugsweise geeignet für die Herstellung in Massenproduktion, wodurch der Anschaffungspreis für einen solchen Bremszylinder möglichst niedrig gehalten werden kann. Die Trägereinheit weist weiterhin einen zweiten Anschlussabschnitt auf, welcher dazu dient eine Wandlereinheit festzulegen. Die Wandlereinheit ist besonders bevorzugt eine Spreizkeileinheit eine Spreizkeiltrommelbremse, in welcher ein Übertragungselement eingreift, um zwei sich koaxial zueinander bewegende Kolbenelemente zu verlagern. Die bevorzugte Hauptfunktion der Wandlereinheit ist dabei die Verlagerung von Bremsbackenelementen, um diese insbesondere bevorzugt in eine Position zu verlagern in welcher sie an einer rotierend um die Fahrzeugachse gelagerten Bremstrommel reiben. Erfindungsgemäß ist zwischen dem ersten Anschlussabschnitt und dem zweiten Anschlussabschnitt ein Gehäusebereich vorgesehen, welcher insbesondere bevorzugt dazu dient ein Übertragungselement aufzunehmen und bevorzugt die Wandlereinheit gegenüber dem Bremszylinder abzustützen. Diese Anordnung ist besonders vorteilhaft bei einer Ausgestaltung der Bremse als Spreizkeiltrommelbremse. Der Gehäusebereich ist bevorzugt ein rohr- bzw. hülsenförmig ausgelegter Bereich der Trägereinheit welcher sich bevorzugt entlang einer Übertragungsachse erstreckt. Durch die Integration des Gehäusebereiches in die Trägereinheit kann insbesondere die Stabilität der Verbindung zwischen der Wandlereinheit und dem Bremszylinder erhöht werden und gleichzeitig Gewicht eingespart werden. Aus dem Stand der Technik bekannte Bremsträger benötigen hierzu ein zusätzliches Element welches zwischen dem Bremszylinder und der Trägereinheit installiert ist, wobei zusätzliche Schnittstellen und damit auch zusätzliche Fehlerquellen, an denen beispielsweise Korrosion oder das Eindringen von Fremdkörpern stattfindet, vorhanden sind. Die erfindungsgemäße Trägereinheit eliminiert diese Nachteile durch eine besonders optimierte Ausgestaltung der Schnittstellen zu Bremszylinder und Wandlereinheit, d.h. des ersten und des zweiten Anschlussabschnitts. Dabei können insbesondere bevorzugt passgenaue Aussparungen vorgesehen sein, in welche Schrauben oder ähnliche Befestigungsmittel eingreifen können um die Wandlereinheit und den Bremszylinder an der Trägereinheit festzulegen. Weiterhin kann es bevorzugt sein am ersten sowie am zweiten Anschlussabschnitt Dichtflächen vorzusehen an welchen die Trägereinheit und die Wandlereinheit in abdichtender Weise zur Anlage bringbar sind, wobei auf diese Weise verhindert wird das Fremdkörper bzw. Verunreinigungen in die Trägereinheit bzw. den Gehäusebereich der Trägereinheit gelangen. Dies ermöglicht eine zuverlässige Verlagerbarkeit des Übertragungselements, wobei eine hohe Lebensdauer und eine verlässliche Funktionstüchtigkeit der Trommelbremse erreichbar sind. Die Hauptaufgabe der Trägereinheit ist es, den Bremszylinder, das Übertragungselement und die Wandlereinheit in einer definierten Lage relativ zu einem Achselement an diesem Achselement festzulegen. Dabei ist die Trägereinheit insbesondere dafür ausgelegt, die während des Bremsvorganges auftretenden Kräfte und Momente aufzunehmen und an das Achselement weiterzuleiten.

Bevorzugt ist die Trägereinheit in einem dritten Anschlussabschnitt am Achselement festlegbar wobei der erste Anschlussabschnitt mit einem Versatz längs einer Radachse zum dritten Anschlussabschnitt angeordnet ist. Der dritte Anschlussabschnitt der Trägereinheit dient insbesondere dazu, an die Trägereinheit übertragene Momente und Kräfte an das Achselement weiterzuleiten bzw. zu übertragen. Es ist von Vorteil, wenn der dritte Anschlussabschnitt Aussparungen oder Rücksprünge aufweist, die mit an dem Achselement vorgesehenen Vorsprüngen oder dritten Elementen wie beispielsweise Nutensteinen formschlüssig in Eingriff bringbar sind, um die Trägereinheit am Achselement festzulegen. Insbesondere bevorzugt ist es, dass der dritte Anschlussabschnitt eine im Wesentlichen gewölbte bzw. runde Form aufweist, um mit einer kreisförmigen bzw. zylinderförmigen oder rotationssymmetrisch ausgebildeten, starren Achse eines Nutzfahrzeuges in Eingriff gebracht zu werden. Dabei kann das Achselement alternativ bevorzugt auch ein Achsstummelelement des Nutzfahrzeuges sein an welchem ein Rad oder eine Vielzahl von Rädern eines Nutzfahrzeuges drehbar gelagert sind. Insbesondere bevorzugt erstreckt sich das Achselement im Wesentlichen entlang einer Radachse wobei der dritte Abschlussabschnitt der Trägereinheit bevorzugt als zylinderförmige Bohrung entlang der Radachse in die Trägereinheit eingebracht sein kann. Mit Vorteil ist der erste Anschlussabschnitt, an welchem der Bremszylinder festlegbar ist, längs der Radachse zum dritten Anschlussabschnitt versetzt angeordnet, wobei der Versatz insbesondere bevorzugt positiv entlang der vom zweiten zum ersten Anschlussabschnitt verlaufenden Richtung ist. Mit anderen Worten bedeutet dies, dass der erste Anschussabschnitt relativ zum dritten Anschlussabschnitt in der vom zweiten Anschlussabschnitt bzw. vom Gehäusebereich wegweisenden Richtung versetzt ist. Mit Blick auf die Funktion des Bremsträgers im Bremssystem bzw. im Fahrwerkssystem des Nutzfahrzeuges ist dies insofern vorteilhaft, dass der erste Anschlussabschnitt auf diese Weise von dem Bereich in dem das Rad des Nutzfahrzeuges drehbar gelagert ist, beabstandet wird und somit vermieden werden kann, dass der Bremszylinder Kontakt mit dem Rad bzw. mit rotierenden Teilen des Fahrwerkssystems des Nutzfahrzeuges gelangt. Da es jedoch andererseits bevorzugt ist, dass der zweite Anschlussabschnitt, an welchem die Wandlereinheit festlegbar ist, möglichst weit in den rotierenden Bereich, insbesondere in die rotierende Bremstrommel hineinragt, ist es bevorzugt den Gehäusebereich lang zu gestalten, wenn der Versatz zwischen erstem und dritten Anschlussabschnitt groß ist. Durch die optimale Auslegung des Gehäusebereichs der Trägereinheit kann auf diese Weise die Anordnung des Bremszylinders und der Wandlereinheit optimiert in Bezug auf die jeweilige Funktion im Fahrwerkssystem des Nutzfahrzeuges sein. Mit anderen Worten ergibt sich für die Trägereinheit somit eine gekröpfte Auslegung, das heißt der Bereich in welchem sich der Gehäusebereich und der erste Anschlussabschnitt befindet, ist entlang der Radialrichtung versetzt relativ zum dritten Anschlussbereich angeordnet, wobei der Bereich der Trägereinheit zwischen dem ersten und dem dritten Anschlussabschnitt eine Schrägstellung relativ zur Radachse aufweist.

Bevorzugt ist das Übertragungselement zur Kraftübertragung im Wesentlichen längs einer Übertragungsachse verlagerbar, wobei die Übertragungsachse derart um einen Winkel α zur Radachse geneigt ist, dass die Wandlereinheit näher an der Radachse angeordnet ist als der Bremszylinder. Vorteilhaft bei dieser Ausführungsform ist, dass der Bremszylinder, welcher im Allgemeinen einen großen Durchmesser aufweist, von der Achse bzw. vom Achselement des Nutzfahrzeuges beabstandet wird, während die Wandlereinheit, welche bevorzugt in die Bremstrommel hineinragt, näher an der Radachse angeordnet ist. Indem der Bremszylinder von der Radachse bzw. vom Achselement weg weisend angeordnet ist, vereinfacht sich zudem die Montage des Bremszylinders.

Mit Vorteil nimmt das Verhältnis des Versatzes zwischen dem ersten und dem dritten Anschlussabschnitt zum Radabstand der Radachse von der Übertragungsachse im Bereich des ersten Anschlussabschnitts Werte zwischen 0,1 und 2 an, bevorzugt ist es 0,3 bis 1,5 und insbesondere bevorzugt bei ca. 0,5 bis 0,9. Um eine Materialeinsparung am Trägerelement bzw. an der Trägereinheit erreichen zu können, ist es bevorzugt, dass der Versatz zwischen erstem und drittem Anschlussabschnitt nicht wesentlich größer oder nicht wesentlich kleiner ist als der Abstand zwischen Radachse und Übertragungsachse im Bereich des ersten Anschlussabschnitts. Je größer das Verhältnis ist, umso stärker ist der Bereich der Trägereinheit zwischen erstem und drittem Anschlussabschnitt relativ zur Senkrechten zur Radachse geneigt. Geht das Verhältnis gegen Null, so steht der Bereich zwischen dem ersten und dem dritten Anschlussabschnitt im Wesentlichen senkrecht zur Radachse. Der Abstand zwischen Radachse und Übertragungsachse im Bereich des Anschlussabschnitts wird bevorzugt entlang einer Senkrechten zur Radachse gemessen, wobei der Versatz zwischen dem ersten und dem dritten Anschlussabschnitt bevorzugt längs oder parallel zur Radachse bestimmt wird. Insbesondere bevorzugt kann durch die gekröpfte Auslegung der Trägereinheit vermieden werden, dass ein weiteres Verbindungsstück zwischen Trägereinheit und Bremszylinder benötigt wird. Es lässt sich auf diese Weise Gewicht sparen und die Schnittstelle zwischen Trägereinheit und Bremszylinder wird vereinfacht.

Insbesondere bevorzugt ist es, dass die Wandlereinheit einen Befestigungsabschnitt aufweist, welcher durch den Gehäusebereich hindurchreicht, wobei ein Befestigungsmittel vorgesehen ist, welches am Befestigungsabschnitt eingreift um die Wandlereinheit an der Trägereinheit festzulegen. Bevorzugt ist es, die Wandlereinheit längs der Übertragungsachse bzw. parallel zur Übertragungsachse in den Gehäusebereich der Trägereinheit einzufügen, wobei ein an der Wandlereinheit vorgesehener Befestigungsabschnitt durch den gesamten Gehäusebereich durchreicht und auf der, der Wandlereinheit gegenüberliegenden Seite des Gehäusebereichs durch beispielsweise eine Mutter oder ein ähnliches Befestigungsmittel festgelegt werden kann. Um ein Verdrehen der Wandlereinheit um die Übertragungsachse relativ zum Gehäusebereich, bzw. relativ zur Trägereinheit zu verhindern, kann es bevorzugt sein, dass miteinander korrespondierende Vor- und Rücksprünge jeweils am Gehäusebereich und am Befestigungsabschnitt der Wandlereinheit vorgesehen sind, welche formschlüssig ineinandergreifen und sich insbesondere bevorzugt parallel zur Übertragungsachse erstrecken. Das Befestigungsmittel mit welchem der Befestigungsabschnitt der Wandlereinheit am Gehäusebereich festgelegt ist, ist dabei bevorzugt auf der Seite des ersten Anschlussabschnitt der Trägereinheit angeordnet, wobei das Befestigungsmittel bevorzugt gleichzeitig als Anlagefläche für den Bremszylinder dienen kann um eine abgedichtete Verbindung zwischen Wandlereinheit und Bremszylinder herzustellen. Insbesondere bevorzugt ist es, dass der Befestigungsabschnitt der Wandlereinheit ein Außengewinde aufweist in welches eine Mutter form- und kraftschlüssig eingreifen kann. Es ist auf diese Weise möglich den Montageaufwand deutlich zu verringern, da lediglich eine Mutter bzw. lediglich ein Befestigungsmittel vorgesehen ist um die Wandlereinheit an der Trägereinheit festzulegen. Weiterhin bevorzugt kann es sein, dass nach der Montage der Wandlereinheit mittels des Befestigungsmittels der Bremszylinder auf das Befestigungsmittel aufgespannt wird und somit eine Verdrehsicherung herstellt, wodurch die Betriebssicherheit des Bremssystems deutlich erhöht werden kann. Weiterhin kann es bevorzugt sein, dass in der Kontaktfläche des Bremszylinders zum ersten Anschlussabschnitt eine sternförmige Aussparung bzw. ein sternförmiger Rücksprung vorgesehen ist, welcher geeignet ist das Befestigungsmittel formschlüssig gegen Verdrehungen relativ zum Befestigungsabschnitt der Wandlereinheit zu sichern. Mit Vorteil ist der Befestigungsabschnitt der Wandlereinheit rohrförmig oder hülsenförmig ausgelegt, wobei das Übertragungselement durch die rohrförmige Aussparung des Befestigungsabschnitts hindurch zwischen Wandlereinheit und Bremszylinder verlagerbar angeordnet werden kann.

Bevorzugt ist es, dass der erste und der zweite Anschlussabschnitt Befestigungsmittel zur form- und/oder kraftschlüssigen Festlegung des Bremszylinders bzw. der Wandlereinheit an der Trägereinheit aufweisen. Insbesondere bevorzugt kann somit auf zusätzliche Bolzen bzw. Schraubenelemente verzichtet werden, wobei deren Funktion bevorzugt durch bereits stoff-, kraft- oder formschlüssig an dem Bremszylinder oder der Wandlereinheit vorgesehene Vorsprünge, welche bevorzugt ein Außengewinde aufweisen, übernommen wird. Es kann auf diese Weise wiederum der Montageaufwand verringert werden, indem die Anzahl der einzelnen bereitzustellenden und zu montierenden Teile reduziert wird.

In bevorzugter Weise sind der Versatz und die Erstreckung des Gehäusebereiches längs der Radachse derart gewählt, dass eine Verbindungslinie zwischen Wandlereinheit und einem Lagerbereich der Trägereinheit senkrecht zur Radachse verläuft. Die Trägereinheit weist bevorzugt einen Lagerbereich auf, welcher insbesondere bevorzugt dazu dient, Bremsbackenelemente schwenkbar zu lagern. Weiterhin ist es bevorzugt, dass die Bremsbackenelemente in einer Ebene bzw. entlang einer Ebene, die senkrecht zur Radachse steht, geschwenkt werden. Zur Schwenkung der Bremsbackenelemente ist die Wandlereinheit vorzugsweise mit Kolbenelementen ausgestattet, welche bevorzugt die dem Lagerbereich der Trägereinheit abgewandten Enden der Bremsbackenelemente verlagern. Es ist folglich insbesondere bevorzugt, dass die Kolbenelemente der Wandlereinheit und der Lagerbereich der Trägereinheit sich in einer Ebene befinden, welche senkrecht zur Radachse steht. Daher ist es bevorzugt die Erstreckung des Gehäusebereiches längs der Radachse und den Versatz zwischen dem ersten Anschlussabschnitt und dem dritten Anschlussabschnitt derart zu wählen, dass die Wandlereinheit und insbesondere bevorzugt die Kolbenelemente der Wandlereinheit in derselben Ebene angeordnet sind wie ein an der Trägereinheit vorzusehender Lagerbereich. Besonders bevorzugt ist der Lagerbereich versetzt zum dritten Anschlussabschnitt der Trägereinheit angeordnet, wobei die Richtung des Versatzes des Lagerbereiches entgegengesetzt zur Richtung des Versatzes des ersten Anschlussabschnitts zum dritten Anschlussabschnitt gewählt ist.

In einer ferner bevorzugten Ausführungsform ist die Trägereinheit zweiteilig ausgebildet, wobei der erste und der zweite Anschlussabschnitt an einem ersten Trägerelement vorgesehen sind, wobei ein Lagerbereich zur Lagerung zumindest eines Bremsbackenelements an einem zweiten Trägerelement vorgesehen ist und wobei der dritte Anschlussabschnitt durch Rücksprünge der Trägerelemente gebildet ist. Zur Vereinfachung der Montage ist es bevorzugt, die Trägereinheit zweiteilig auszubilden, wobei insbesondere bevorzugt der dritte Anschlussabschnitt zur Festlegung am Achselement jeweils hälftig durch das erste und das zweite Trägerelement gebildet wird. Hierzu ist es insbesondere bevorzugt, dass das erste und das zweite Trägerelement jeweils eine gewölbte, bevorzugt kreisförmige Aussparung aufweisen, wobei im zusammengesetzten Zustand die beiden Aussparung bzw. Rücksprünge an den Trägerelementen den dritten Anschlussabschnitt der Trägereinheit bilden. Weiterhin ist es bevorzugt, dass die beiden Trägerelemente mittels kraft- und formschlüssiger Verbindungen, beispielsweise über Bolzen- oder Schraubenelemente, aneinander und gleichzeitig an dem Achselement kraftschlüssig festlegbar sind. Zur Unterstützung der kraftschlüssigen Verbindung kann es besonders bevorzugt sein, eine stoffschlüssige Verbindung, beispielsweise mittels eines Klebers oder durch Löten, herzustellen. Weiterhin können geeignete Vorsprünge und Rücksprünge sowohl am Achselement als auch an den beiden Trägerelementen vorgesehen sein, welche die kraft- bzw. die stoffschlüssige Verbindung durch einen Formschluss unterstützen. Bevorzugt ist die zweiteilige Ausführungsform insbesondere, da die Trägereinheit nicht längs der Radachse auf das Achselement aufgeschoben werden muss und das Achselement infolgedessen Hinterschneidungen mit dem Bereich, in welchem die Trägereinheit am Achselement festgelegt wird, aufweisen darf. Die Trägereinheit ist quer zur Radachse an das Achselement heranführbar, um am Achselement mittels einer kraft-, form- oder stoffschlüssigen Verbindung festgelegt zu werden.

Es ist insbesondere bevorzugt, dass die Trägerelemente über Befestigungsmittel form- und kraftschlüssig aneinander und am Achselement festlegbar sind. Besonders bevorzugt können dazu Schrauben verwendet werden, welche in an den Trägerelementen vorgesehenen Aussparungen eingreifen, um die Trägerelemente gegeneinander zu halten und gleichzeitig bevorzugt das Achselement in dem von beiden Trägerelementen bevorzugt gebildeten dritten Anschlussabschnitt festzulegen. Dabei kann es bevorzugt sein, dass eines der Trägerelemente Aussparungen mit Innengewinde aufweist und das jeweils gegenüberliegende Trägerelement Aussparungen aufweist, durch welche die Befestigungsmittel führbar sind. Alternativ bevorzugt können auch Muttern zur Festlegung der Befestigungsmittel an den Trägerelementen verwendet werden.

In einer weiteren bevorzugten Ausführungsform kann das Trägerelement bzw. bei einer mehrteiligen Ausführungsform zumindest eines der Trägerelemente einstückig mit dem Achselement ausgebildet sein. Insbesondere bevorzugt bei Verwendung eines Gießverfahrens kann das Achselement gemeinsam mit dem bzw. einem der beiden Trägerelemente hergestellt sein, wobei das jeweils andere Trägerelement beispielsweise über Befestigungsmittel am ersten Trägerelement bzw. am Achselement festlegbar ist. Es kann mittels dieser Auslegungsform wiederum der Montageaufwand verringert werden, indem die Anzahl an einzelnen zu montierenden Teilen reduziert wird. Insbesondere bevorzugt wird dabei das erste Trägerelement, an welchem sich bevorzugt der Gehäusebereich und der erste und zweite Anschlussabschnitt befinden, als loses Bauteil gestaltet, welches an dem einstückig mit der Achse ausgeführten zweiten Trägerelement festlegbar ist. Besonders bevorzugt kann dabei im Servicefall das erste Trägerelement auf einfache Weise bei gleichzeitig installiertem Bremszylinder und Wandlereinheit von dem Achssystem demontiert werden, um dann beispielsweise ergonomisch günstig auf einer Werkbank weiter gewartet werden zu können.

In einer ferner bevorzugten Ausführungsform ist am ersten Anschlussabschnitt ein erstes Dämpfelement vorgesehen, um den Bremszylinder schwingungsgedämpft an der Trägereinheit zu lagern. Insbesondere während der Fahrt des Nutzfahrzeuges über unebenes Gelände können starke Schwingungen des Bremszylinders relativ zur Trägereinheit auftreten, welche die Schnittstelle, d.h. die Befestigungsstelle zwischen Bremszylinder und dem ersten Anschlussabschnitt stark belasten. Zyklischer Verschleiß kann als Folge auftreten. Es ist daher bevorzugt, zumindest einen gewissen Teil der auftretenden Schwingungen zwischen Bremszylinder und Trägereinheit abzudämpfen, wobei hierzu bevorzugt ein erstes Dämpferelement verwendet wird. Dieses kann beispielsweise zwischen dem ersten Anschlussabschnitt und dem Bremszylinder angeordnet sein und wird bevorzugt über eine Pressverbindung in Position gehalten. Dabei darf die Elastizität des Dämpfungselementes jedoch nicht zu groß sein, um die gerichtete Kraftübertragung des Bremszylinders auf das Übertragungselement nicht einzuschränken. Insbesondere bevorzugt kann es sein, als Herstellungsmaterial für das Dämpferelement einen Hartgummi oder einen faserverstärkten Verbundwerkstoff zu verwenden, der eine bestimmte Elastizität bei gleichzeitiger hoher schwingungsdämpfender Wirkung aufweist. Mit Vorteil übernimmt das erste Dämpferelement auch eine Dichtfunktion, um den Kontaktbereich zwischen dem Bremszylinder und dem ersten Anschlussabschnitt gegen eindringende Fremdkörper oder Feuchtigkeit zu schützen.

In einer weiteren bevorzugten Ausführungsform stützt sich das Übertragungselement über zumindest einen elastischen Abschnitt schwingungsgedämpft an dem Bremszylinder und/oder der Wandlereinheit ab, um eine Stellkraft vom Bremszylinder auf die Wandlereinheit zu übertragen. Um insbesondere bevorzugt während des Bremsvorganges das Auftreten von Resonanzschwingungen zwischen Bremse und Bremszylinder zu vermeiden, kann es bevorzugt sein, das Übertragungselement über schwingungsgedämpfte Abschnitte bzw. elastische Abschnitte sowohl am Bremszylinder als auch an der Wandlereinheit abzustützen. Dabei können insbesondere bevorzugt während des Bremsvorganges auftretende, unregelmäßige Kraft- bzw. Momentspitzen abgefedert werden, die ansonsten direkt auf den Bremszylinder einwirken und ihn empfindlich schädigen könnten. Die elastischen Abschnitte des Übertragungselements sind bevorzugt dafür geeignet, die hohen Bremskräfte, die vom Bremszylinder aufgebracht werden, zu übertragen und dürfen nicht zu stark einfedern, um nicht die Bremswirkung zu verzögern oder abzuschwächen. Insbesondere bevorzugt ist der elastische Abschnitt formschlüssig an dem Übertragungselement festgelegt und kann sich nur gemeinsam mit diesem entlang der Übertragungsachse verlagern und ist gleichzeitig gegen eine Verlagerung quer zur Übertragungsachse an den jeweiligen korrespondierenden Kraftübertragungselementen des Bremszylinders bzw. der Wandlereinheit gesichert.

Insbesondere bevorzugt dämpft die schwingungsgedämpfte Lagerung Schwingungen im Frequenzbereich von 2 Hz bis 1 kHz, bevorzugt 3 bis 200 Hz und insbesondere bevorzugt im Frequenzbereich von 3 bis 50 Hz. Die jeweils zu dämpfenden Schwingungen hängen von den Eigenfrequenzen des schwingenden Bremssystems ab. Hierbei spielen die Masse und die Erregungsfrequenzen für eventuell auftretende Schwingungen am Fahrwerksystem eine Rolle, wobei die schwingungsgedämpfte Lagerung des Bremszylinders bzw. des Übertragungselements jeweils nur Schwingungen in einem bestimmten Bereich dämpfen soll. Auf diese Weise kann insbesondere verhindert werden, dass Resonanzen auftreten und sich das Bremssystem bzw. der Bremsträger in einem bestimmten Frequenzbereich einschwingt, die Amplituden größer werden und eventuell starke Beschädigungen am Bremszylinder und/oder am Übertragungselement und/oder an der Wandlereinheit bzw. während des Bremsvorganges auch im Trommelelement auftreten.

Weitere Vorteile und Merkmale der Erfindung ergeben sich aus der nachfolgenden Beschreibung mit Bezug auf die beigefügten Figuren. Einzelne Merkmale der gezeigten Ausführungsform können dabei im Rahmen der Erfindung miteinander kombiniert werden. Es zeigen:
- Fig. 1: eine Schnittansicht einer bevorzugten Ausführungsform des erfindungsgemäßen Bremsträgers,
- Fig. 2: eine Schnittansicht einer bevorzugten Ausführungsform des erfindungsgemäßen Bremsträgers, und
- Fig. 3: eine perspektivische Explosionsansicht einer bevorzugten Ausführungsform des erfindungsgemäßen Bremsträgers.

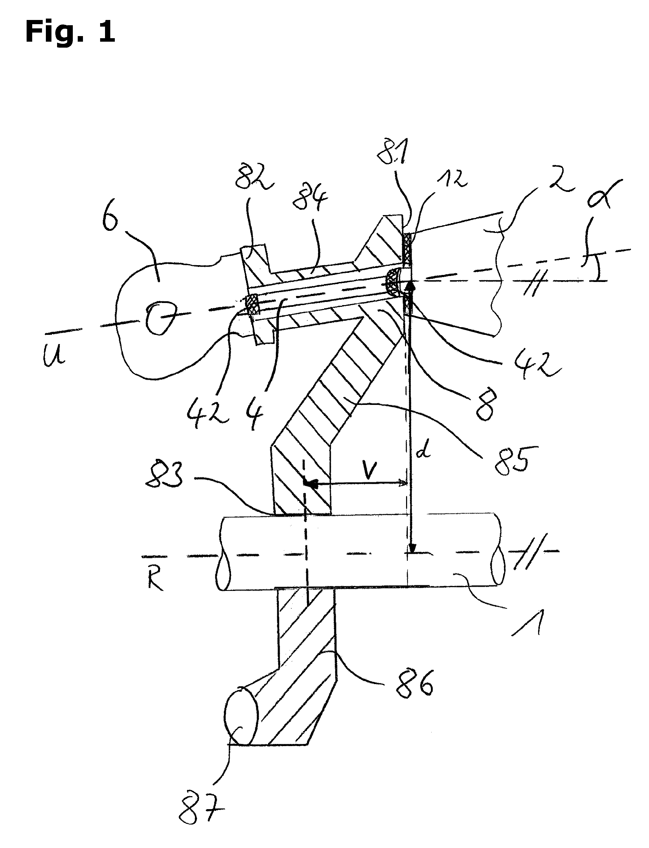

Der in Fig. 1 gezeigte Bremsträger, vorzugsweise einer Spreizkeiltrommelbremse, bzw. Spreizkeiltrommelbremsträger weist eine Trägereinheit 8 auf, welche in einem dritten Anschlussabschnitt 83 an einem Achselement 1 festgelegt ist. Das Achselement 1 ist dabei bevorzugt ein rotationssymmetrischer, vorzugsweise rohrförmiger Körper und insbesondere beispielsweise die starre Achse oder ein Achsstummel eines Nutzfahrzeuges. Der dritte Anschlussabschnitt 83 ist insbesondere bevorzugt eine Aussparung in der Trägereinheit 8, welche dafür geeignet ist, eine form- oder kraftschlüssige Verbindung mit dem Achselement 1 einzugehen und auf diese Weise die Trägereinheit 8 am Achselement 1 festzulegen. Weiterhin weist die Trägereinheit 8 einen ersten Anschlussabschnitt 81 auf, an welchem ein Bremszylinder 2 an der Trägereinheit 8 festlegbar ist. Besonders bevorzugt ist der Bremszylinder 2 über ein erstes Dämpferelement 12 am ersten Anschlussabschnitt 81 gelagert, wobei insbesondere bevorzugt auftretende Schwingungen zwischen Trägereinheit 8 und Bremszylinder 2 abgedämpft werden können. Weiterhin ist dargestellt, dass der erste Anschlussabschnitt 81 bevorzugt mit einem Versatz v zum dritten Anschlussabschnitt 83 angeordnet ist. Dabei wird der Versatz v bevorzugt parallel zu einer Radachse R und von der mittleren Erstreckung des dritten Anschlussabschnitts 83 längs der Radachse R bis zur mittleren Erstreckung des ersten Anschlussabschnitts 81 längs der Parallelen zur Radachse R gemessen. Mit anderen Worten ist die Trägereinheit 8 gekröpft ausgeführt. Dabei ist es insbesondere bevorzugt, dass die Kröpfung von einem an das Achselement 1 anzulagernden Rad des Nutzfahrzeuges weg weisend ausgeführt ist. In der Figur ist diese Kröpfung also nach rechts weisend bzw. der erste Anschlussabschnitt 81 ist weiter rechts angeordnet als der dritte Anschlussabschnitt 83, da bevorzugt links am Achselement 1 ein Rad des Nutzfahrzeuges (nicht gezeigt) am Achselement 1 drehbar gelagert ist. Weiterhin weist die Trägereinheit 8 einen zweiten Anschlussabschnitt 82 auf, an welchem eine Wandlereinheit 6 an der Trägereinheit 8 festlegbar ist. Die Wandlereinheit 6 ist bevorzugt eine Spreizkeileinheit einer Trommelbremse, bzw. bevorzugt einer Spreizkeiltrommelbremse. Zwischen dem ersten Anschlussabschnitt 81 und dem zweiten Anschlussabschnitt 82 weist die Trägereinheit 8 einen Gehäusebereich 84 auf, der besonders bevorzugt rohrförmig ausgelegt ist und dazu dient, ein Übertragungselement 4 aufzunehmen und dabei den Bremszylinder 2 und die Wandlereinheit 6 gegeneinander abzustützen bzw. in einer definierten Position relativ zueinander zu halten. Hierzu ist der Gehäusebereich 84 vorzugsweise hülsenförmig ausgebildet und weist an seinen jeweiligen Enden, bzw. am ersten und am zweiten Anschlussabschnitt 81, 82, Flansche zur Aufnahme von Befestigungsmitteln zur Festlegung der Wandlereinheit 6 und des Bremszylinders 2 auf. Das Übertragungselement 4 dient dabei in erster Linie der Übertragung einer Stellkraft, die vom Bremszylinder 2 aufgebracht wird, an die Wandlereinheit 6, um in der Wandlereinheit 6 vorgesehene Kolbenelemente zu verlagern. Insbesondere bevorzugt ist es, dass das Übertragungselement 4 über elastische Abschnitte 42 sowohl am Bremszylinder 2 als auch an der Wandlereinheit 6 abgestützt ist. Mittels dieser elastischen Abschnitte 42 kann die direkte Übertragung von Schwingung und Stößen von Wandlereinheit 6 zum Bremszylinder 2, oder umgekehrt, und das Auftreten von Resonanzschwingungen im Bremssystem vermindert werden. Weiterhin überträgt das Übertragungselement 4 eine Kraft im Wesentlichen längs einer Übertragungsachse U, wobei die Übertragungsachse U bevorzugt um einen Winkel α relativ zur Radachse R geneigt ist. Insbesondere bevorzugt ist die Trägereinheit 8 zweiteilig ausgeführt, wobei ein erstes Trägerelement 85 vorgesehen ist, welches den ersten Anschlussabschnitt 81, den zweiten Anschlussabschnitt 82 und den Gehäusebereich 84 aufweist und ein zweites Trägerelement 86, welches einen Lagerbereich 87 aufweist, vorgesehen sind. Der Lagerbereich 87 dient dabei insbesondere bevorzugt der drehbaren bzw. schwenkbaren Lagerung von zumindest einem Bremsbackenelement und weist hierfür bevorzugt beispielsweise eine Kugelpfanne auf, in welcher sich ein Kugelgelenk eines Bremsbackenelements abstützt. Insbesondere bevorzugt ist die Übertragungsachse U im Bereich des ersten Anschlussabschnitts 81 um einen Abstand d von der Radachse R entfernt. Dabei ist es weiterhin bevorzugt, dass das Verhältnis zwischen dem Versatz v und dem Abstand d Werte zwischen 0,1 und 2, bevorzugt 0,3 bis 1,5, annimmt und insbesondere bevorzugt bei ca. 0,6 liegt. Der Winkel α weist insbesondere bevorzugt Werte zwischen 0° und 30°, besonders bevorzugt 1° und 15° und insbesondere bevorzugt einen Winkel von ca. 10° auf. Durch die Veränderung des Winkels α kann der Bremszylinder 2 in eine mehr oder weniger von dem Achselement 1 wegweisende Stellung gebracht werden, wodurch sich die Montage des Bremszylinders 2 an der Trägereinheit 8 vereinfachen und insbesondere an die geometrischen Gegebenheiten am Fahrwerk des Nutzfahrzeuges anpassen lässt.

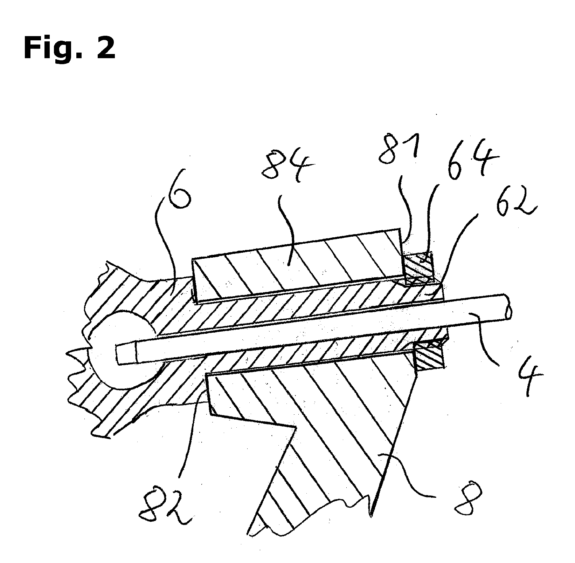

Fig. 2 zeigt eine Schnittansicht einer besonders bevorzugten Ausführungsform der Trägereinheit 8 und insbesondere der Wandlereinheit 6. Dabei weist die Wandlereinheit 6 einen Befestigungsabschnitt 62 auf, welcher besonders bevorzugt durch den Gehäusebereich 84 hindurch steckbar ist und auf seinem, im Bereich des ersten Anschlussabschnitts 81 liegenden Endes ein Außengewinde aufweist, in welches ein Befestigungsmittel 64 eingreifen kann. Es ist auf diese Weise möglich, die Wandlereinheit 6 mittels nur eines Befestigungsmittels 64 und damit auch mittels nur eines Montageschrittes an der Trägereinheit 8 festzulegen, wobei insbesondere bevorzugt Längsnuten vorgesehen sein können, um die Wandlereinheit 6 gegen Verdrehung relativ zur Trägereinheit 8 zu sichern. Weiterhin bevorzugt ist es, dass die Wandlereinheit 6 im Bereich des zweiten Anschlussabschnitts 82 einen Kragen bzw. eine Kante aufweist, mit welcher sich die Wandlereinheit 6 an der Trägeinheit 8 abstützt. Insbesondere bevorzugt ist es, dass das Befestigungsmittel 64 derart ausgelegt ist, dass der Bremszylinder 2 mit einer dafür vorgesehenen Kontaktfläche auf das Befestigungsmittel 64 auflegbar ist, wobei gleichzeitig eine abdichtende Verbindung zwischen dem ersten Anschlussabschnitt 81, dem Befestigungsmittel 64 und dem Bremszylinder 2 herstellbar ist. Das Übertragungselement 4 wird bei dieser bevorzugten Ausführungsform sowohl vom Gehäusebereich 84 als auch von dem im Gehäusebereich 84 eingesteckten Befestigungsabschnitt 62 aufgenommen, wobei der Befestigungsabschnitt 62 der Wandlereinheit 6 insbesondere bevorzugt rohrförmig bzw. hülsenförmig ausgelegt ist.

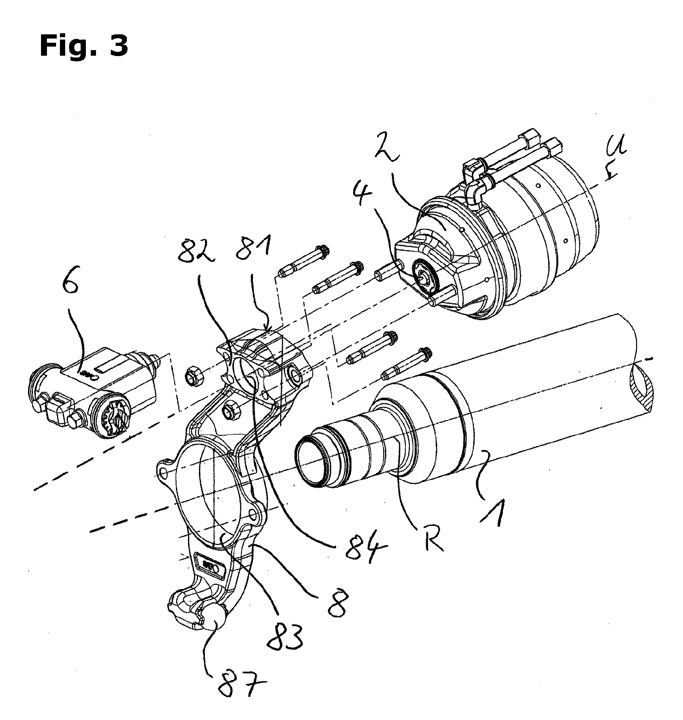

In Fig. 3 ist eine perspektivische Explosionsansicht eines bevorzugten Bremssystems mit erfindungsgemäßem Bremsträger abgebildet. Dabei können eine Wandlereinheit 6 und ein Bremszylinder 2 jeweils an den Anschlussabschnitten 81, 82 der Trägereinheit 8 festgelegt werden, wobei hierzu insbesondere bevorzugt Schraubenelemente, welche bevorzugt in an der Wandlereinheit 6 und dem Bremszylinder 2 vorgesehene Gewinde eingreifen oder an zusätzlich anzubringenden Muttern festlegbar sind. Das Übertragungselement 4 ist im gezeigten Beispiel versenkt im Bremszylinder 2 dargestellt, wobei es bei Anlegen eines Drucks an den bevorzugt pneumatisch betriebenen Bremszylinder 2 ausfährt und in Kontakt mit einem dafür vorgesehenen Element der Wandlereinheit 6 gelangt. Weiterhin dargestellt ist die besonders auf günstigem Kraftfluss ausgelegte Geometrie der Trägereinheit 8, welche es ermöglicht hohe Drehmomente und Bremskräfte über die Wandlereinheit 6 an die Trägereinheit 8 und über den Lagerbereich 87 an die Trägereinheit 8 zu übertragen, wobei die Trägereinheit 8 ihrerseits am Achselement 1 festlegbar ist, um Momente und Kräfte an das Achselement 1 zu übertragen. In der gezeigten Ausführungsform ist die Trägereinheit 8 einstückig ausgeführt und wird bevorzugt beispielsweise mittels einer Schweiß- oder Lötverbindung am Achselement 1 festgelegt.

### Bezugszeichenliste:

- 1: - Achselement
- 2: - Bremszylinder
- 4: - Übertragungselement
- 6: - Wandlereinheit
- 8: - Trägereinheit
- 12: - erstes Dämpferelement
- 42: - elastischer Abschnitt
- 62: - Befestigungsabschnitt
- 64: - Befestigungsmittel
- 81: - erster Anschlussabschnitt
- 82: - zweiter Anschlussabschnitt
- 83: - dritter Anschlussabschnitt
- 84: - Gehäusebereich
- 85: - erstes Trägerelement
- 86: - zweites Trägerelement
- 87: - Lagerbereich
- R: - Radachse
- U: - Übertragungsachse
- v: - Versatz erster - dritter Anschlussabschnitt
- d: - Abstand Übertragungsachse - Radachse
- α: - Winkel

## Patentansprüche

1. Bremsträger einer Trommelbremse, umfassend eine Trägereinheit (8),
wobei die Trägereinheit (8) einen ersten Anschlussabschnitt (81) aufweist, an welchem ein Bremszylinder (2) festlegbar ist,
wobei die Trägereinheit (8) einen zweiten Anschlussabschnitt (82) aufweist, an welchem eine Wandlereinheit (6) festlegbar ist,
wobei zwischen dem ersten Anschlussabschnitt (81) und dem zweiten Anschlussabschnitt (82) ein Gehäusebereich (84) zur Aufnahme eines Übertragungselements (4) vorgesehen ist,
wobei der Bremszylinder (2), das Übertragungselement (4) und die Wandlereinheit (6) über die Trägereinheit (8) an einem Achselement (1) des Nutzfahrzeuges festlegbar sind,
wobei das Übertragungselement (4) zur Kraftübertragung im Wesentlichen längs einer Übertragungsachse (U) verlagerbar ist, und
wobei die Übertragungsachse (U) derart um einen Winkel α zur Radachse (R) geneigt ist, dass die Wandlereinheit (6) näher an der Radachse (R) angeordnet ist, als der Bremszylinder (2),
**dadurch gekennzeichnet, dass**
die Trägereinheit (8) in einem dritten Anschlussabschnitt (83) am Achselement (1) festlegbar ist,
wobei der erste Anschlussabschnitt (81) mit einem Versatz (v) längs einer Radachse (R) zum dritten Anschlussabschnitt (83) angeordnet ist, und
wobei das Verhältnis des Versatzes (v) zwischen dem ersten und dem dritten Anschlussabschnitt (81, 83) zum Abstand (d) der Radachse (R) von der Übertragungsachse (U) im Bereich des ersten Anschlussabschnitts (81) Werte zwischen 0,1 und 2 annimmt.

2. Bremsträger nach Anspruch 1,
wobei das Verhältnis des Versatzes (v) zwischen dem ersten und dem dritten Anschlussabschnitt (81, 83) zum Abstand (d) der Radachse (R) von der Übertragungsachse (U) im Bereich des ersten Anschlussabschnitts (81) Werte zwischen 0,3 bis 1,5 und insbesondere bevorzugt ca. 0,5 bis 0,9 ist.

3. Bremsträger nach einem der vorhergehenden Ansprüche,
mit einer Wandlereinheit (6), welche an der Trägereinheit (8) festgelegt ist und einen Befestigungsabschnitt (62) aufweist, welcher durch den Gehäusebereich (84) hindurch reicht, und
wobei ein Befestigungsmittel (64) vorgesehen ist, welches am Befestigungsabschnitt (62) eingreift, um die Wandlereinheit (6) an der Trägereinheit (8) festzulegen.

4. Bremsträger nach einem der vorhergehenden Ansprüche, mit einer Wandlereinheit (6),
wobei der Versatz (v) und die Erstreckung des Gehäusebereichs (84) längs der Radachse (R) derart gewählt sind, dass eine Verbindungslinie zwischen der an der Trägereinheit (8) festgelegten Wandlereinheit (6) und einem Lagerbereich (87) der Trägereinheit (8) senkrecht zur Radachse (R) verläuft.

5. Bremsträger nach einem der vorhergehenden Ansprüche,
wobei die Trägereinheit (8) zweiteilig ausgebildet ist,
wobei der erste und der zweite Anschlussabschnitt (81, 82) an einem ersten Trägerelement (85) vorgesehen sind,
wobei ein Lagerbereich (87) zur Lagerung zumindest eines Bremsbackenelements an einem zweiten Trägerelement (86) vorgesehen ist, und
wobei der dritte Anschlussabschnitt (83) durch Rücksprünge der Trägerelemente (85, 86) gebildet ist.

6. Bremsträger nach Anspruch 5,
wobei die Trägerelemente (85, 86) über Befestigungsmittel form- und kraftschlüssig aneinander und am Achselement (1) festlegbar sind.

7. Bremsträger nach einem der Ansprüche 5 bis 6,
wobei zumindest eines der Trägerelemente (85,86) einstückig mit dem Achselement (1) ausgebildet ist.

8. Bremsträger nach einem der vorhergehenden Ansprüche,
wobei am ersten Anschlussabschnitt (81) ein erstes Dämpferelement (12) vorgesehen ist, um den Bremszylinder (2) schwingungsgedämpft an der Trägereinheit (8) zu lagern.

9. Bremsträger nach einem der vorhergehenden Ansprüche,
wobei sich das Übertragungselement (4) über zumindest einen elastischen Abschnitt (42) schwingungsgedämpft an dem Bremszylinder (2) und/oder der Wandlereinheit (6) abstützt, um eine Stellkraft von dem Bremszylinder (2) auf die Wandlereinheit (6) zu übertragen.

10. Bremsträger nach einem der Ansprüche 8 bis 9,
wobei die schwingungsgedämpfte Lagerung ausgelegt ist, Schwingungen im Frequenzbereich von 2 Hz bis 1 kHz, bevorzugt 3 bis 200 Hz und insbesondere bevorzugt im Frequenzbereich von 3 bis 50 Hz zu dämpfen.

11. Bremsträger nach einem der vorhergehenden Ansprüche,
wobei die Trägereinheit (8) gekröpft ausgelegt ist.

12. Bremsträger nach einem der vorhergehenden Ansprüche,
wobei der erste und der zweite Anschlussabschnitt (81, 82) Befestigungsmittel zur formschlüssigen und/oder kraftschlüssigen Festlegung des Bremszylinders (2) und/oder der Wandlereinheit (6) an der Trägereinheit (8) aufweisen.

## Claims

1. A brake carrier of a drum brake, comprising a carrier unit (8),
wherein the carrier unit (8) has a first connecting section (81), to which a brake cylinder (2) can be fixed,
wherein the carrier unit (8) has a second connecting section (82), to which a converter unit (6) can be fixed,
wherein between the first connecting section (81) and the second connecting section (82) a housing region (84) is provided for receiving a transmission element (4),
wherein the brake cylinder (2), the transmission element (4) and the converter unit (6) can be fixed via the carrier unit (8) to an axle element (1) of the utility vehicle,
wherein the transmission element (4) for force transmission can be displaced mainly along a transmission axle (U), and
wherein the transmission axle (U) is tilted or inclined in relation to the wheel axle (R) by an angle α in such a way that the converter unit (6) is arranged closer to the wheel axle (R) than the brake cylinder (2),
**characterized in that**
the carrier unit (8) can be fixed in a third connecting section (83) at the axle element (1),
wherein the first connecting section (81) is arranged by an offset (v) along a wheel axle (R) to the third connecting section (83), and
wherein the relation of the offset (v) between the first and third connecting sections (81, 83) and the distance (d) of the wheel axle (R) from the transmission axle (U) has values between 0.1 and 2 in the region of the first connecting section (81).

2. The brake carrier according to claim 1,
wherein the relation of the offset (v) between the first and third connecting sections (81, 83) and the distance (d) of the wheel axle (R) from the transmission axle (U) has values between 0.3 and 1.5, and most preferably between about 0.5 and 0.9, in the region of the first connecting section (81).

3. The brake carrier according to any one of the preceding claims,
with a converter unit (6), which is fixed to the carrier unit (8) and has a mounting section (62), which reaches through the housing region (84), and wherein a fixture (64) is provided, which engages at the mounting section (62) in order to fix the converter unit (6) to the carrier unit (8).

4. The brake carrier according to any one of the preceding claims,
wherein the offset (v) and the extension of the housing region (84) along the wheel axle (R) is configured such that a connection line runs vertically to the wheel axle (R) between the converter unit (6), which is fixed to the carrier unit (8), and a bearing section (87) of the carrier unit (8).

5. The brake carrier according to any one of the preceding claims,
wherein the carrier unit (8) is two-piece,
wherein the first and second connecting sections (81, 82) are provided at a first supporting element (85),
wherein a bearing section (87) is provided to bear at least one brake shoe element at a second supporting element (86), and
wherein the third connecting section (83) is formed by recesses of the supporting elements (85, 86).

6. The brake carrier according to claim 5,
wherein the supporting elements (85, 86) can be form-fitted and force-fitted the one to the other and to the axle element (1) by means of fixtures.

7. The brake carrier according to any one of claims 5 to 6,
wherein at least one of the supporting elements (85, 86) forms an integral part of the axle element (1).

8. The brake carrier according to any one of the preceding claims,
wherein a first damping element (12) is provided at the first connecting section (81) in order to bear the brake cylinder (2) in a vibration-cushioned way at the carrier unit (8).

9. The brake carrier according to any one of the preceding claims,
wherein the transmission element (4) is supported by at least one flexible section (42) in a vibration-cushioned way to at least one of the brake cylinder (2) and the converter unit (6), in order to transfer an actuating power from the brake cylinder (2) to the converter unit (6).

10. The brake carrier according to any one of claims 8 to 9,
wherein the vibration-cushioned bearing is designed to cushion vibrations in the frequency spectrum of from 2 Hz to 1 kHz, preferably from 3 to 200 Hz, and most preferably in the frequency spectrum of from 3 to 50 Hz.

11. The brake carrier according to any one of the preceding claims,
wherein the carrier unit (8) is cranked.

12. The brake carrier according to any one of the preceding claims,
wherein the first and second connecting sections (81, 82) have fixtures to at least one of form-fit and force-fit at least one of the brake cylinder (2) and the converter unit (6) to the carrier unit (8).

## Revendications

1. Support de frein d'un frein à tambour, comprenant une unité porteuse (8), dans lequel l'unité porteuse (8) comprend une première portion de raccordement (81) sur laquelle peut être immobilisé un cylindre de frein (2), dans lequel l'unité porteuse (8) comprend une seconde portion de raccordement (82) sur laquelle peut être immobilisée une unité de conversion (6), dans lequel il est prévu une zone en boîtier (84), entre la première portion de raccordement (81) et la seconde portion de raccordement (82), pour la réception d'un élément de transmission (4),
dans lequel le cylindre de frein (2), l'élément de transmission (4) et l'unité de conversion (6) peuvent être immobilisés via l'unité porteuse (8) sur un élément d'essieu (1) d'un véhicule utilitaire,
dans lequel, pour la transmission d'une force, l'unité de transmission (4) est déplaçable sensiblement le long d'un axe de transmission (U), et
dans lequel l'axe de transmission (U) est incliné par rapport à l'axe de roue (R) d'un angle □ tel que l'unité de conversion (6) est agencée plus proche de l'axe de roue (R) que le cylindre de frein (2),
**caractérisé en ce que**
l'unité porteuse (8) peut être immobilisée dans une troisième portion de raccordement (83) sur l'élément d'essieu (1),
dans lequel la première portion de raccordement (81) est agencée avec un décalage (v) le long d'un axe de roue (R) par rapport à la troisième portion de raccordement (83), et
dans lequel le rapport du décalage (v) entre la première et la troisième portion de raccordement (81, 83) sur la distance (d) de l'axe de roue (R) depuis l'axe de transmission (U) dans la région de la première portion de raccordement (81) adopte des valeurs entre 0,1 et 2.

2. Support de frein selon la revendication,
dans lequel le rapport du décalage (v) entre la première et la troisième portion de raccordement (81, 83) sur la distance (d) de l'axe de roue (R) depuis l'axe de transmission (U) dans la région de la première portion de raccordement (81) adopte des valeurs entre 0,3 et 1,5, et de manière particulièrement préférée d'environ 0,5 à 0,9.

3. Support de frein selon l'une des revendications précédentes,
comprenant une unité de conversion (6) qui est immobilisée sur l'unité porteuse (8) et comporte une portion de fixation (62) qui passe à travers la zone en boîtier (84), et
dans lequel il est prévu un moyen de fixation (64), qui s'engage contre la portion de fixation (62) pour immobiliser l'unité de conversion (6) sur l'unité porteuse (8).

4. Support de frein selon l'une des revendications précédentes, comprenant une unité de conversion (6),
dans lequel le décalage (v) et l'extension de la zone en boîtier (84) le long de l'axe de roue (R) sont sélectionnés de telle façon qu'une ligne de liaison entre l'unité de conversion (6) immobilisée sur l'unité porteuse (8) et une zone de montage (87) de l'unité porteuse (8) s'étend perpendiculairement à l'axe de roue (R).

5. Support de frein selon l'une des revendications précédentes,
dans lequel l'unité porteuse (8) est réalisée en deux parties,
dans lequel la première et la seconde portion de raccordement (81, 82) sont prévues sur un premier élément porteur (85),
dans lequel une zone de montage (87) pour le montage d'au moins un élément de segment de frein est prévue sur un second élément porteur (86), et
dans lequel la troisième portion de raccordement (83) est formée par des ressauts des éléments porteurs (85, 86).

6. Support de frein selon la revendication 5,
dans lequel les éléments porteurs (85, 86) peuvent être immobilisés via des moyens de fixation par coopération de formes et par coopération de forces l'un contre l'autre et sur l'élément d'essieu (1).

7. Support de frein selon l'une des revendications5 à 6,
dans lequel l'un au moins des éléments porteurs (85, 86) est réalisé d'une seule pièce avec l'élément d'essieu (1).

8. Support de frein selon l'une des revendications précédentes,
dans lequel il est prévu un premier élément amortisseur (12) sur la première portion de raccordement (81), afin de monter le cylindre de frein (2) sur l'unité porteuse (8) d'une manière amortie vis-à-vis des vibrations.

9. Support de frein selon l'une des revendications précédentes,
dans lequel l'élément de transmission (4) est soutenu sur le cylindre de frein (2) et/ou sur l'unité de conversion (6) d'une manière amortie vis-à-vis des vibrations via au moins une portion élastique (42), afin de transmettre une force de positionnement depuis le cylindre de frein (2) vers l'unité de conversion (6).

10. Support de frein selon l'une des revendications 8 à 9,
dans lequel le montage d'une manière amortie vis-à-vis des vibrations est conçu pour amortir des vibrations dans la plage de fréquences de 2 Hz à 1 kHz, de préférence 3 à 200 Hz et de façon particulièrement préférée dans la plage de fréquences de 3 à 50 Hz.

11. Support de frein selon l'une des revendications précédentes,
dans lequel l'unité porteuse (8) est conçue sous forme coudée.

12. Support de frein selon l'une des revendications précédentes,
dans lequel la première et la seconde portion de raccordement (81, 82) comprennent des moyens de fixation pour l'immobilisation par coopération de formes et/ou par coopération de forces du cylindre de frein (2) et/ou de l'unité de conversion (6) sur l'unité porteuse (8).
